(19) Europäisches Patentamt
European Patent Office
Office européen des brevets

(11) EP 2 488 573 B1

(12) FASCICULE DE BREVET EUROPEEN

(45) Date de publication et mention de la délivrance du brevet:
**13.02.2019 Bulletin 2019/07**

(21) Numéro de dépôt: **10773993.0**

(22) Date de dépôt: **14.10.2010**

(51) Int Cl.:
*C08L 91/00* [(2006.01)]   *C08L 95/00* [(2006.01)]
*C08J 3/22* [(2006.01)]   *C08K 5/103* [(2006.01)]
*C08K 5/101* [(2006.01)]   *C08K 3/06* [(2006.01)]
*C08L 53/02* [(2006.01)]

(86) Numéro de dépôt international:
**PCT/IB2010/054660**

(87) Numéro de publication internationale:
**WO 2011/045766 (21.04.2011 Gazette 2011/16)**

(54) **SOLUTIONS-MÈRES FORTEMENT CONCENTRÉES EN POLYMÈRE A BASE D'HUILES D'ORIGINE VÉGÉTALE ET/OU ANIMALE POUR LA PRÉPARATION DE COMPOSITIONS BITUME/POLYMÈRE**

ROHSTOFFLÖSUNGEN MIT HOHEN KONZENTRATIONEN AUS POLYMEREN MIT ÖLEN PFLANZLICHEN UND/ODER TIERISCHEN URSPRUNGS ZUR HERSTELLUNG VON BITUMEN/POLYMER-ZUSAMMENSETZUNGEN

STOCK SOLUTIONS HAVING HIGH CONCENTRATIONS OF POLYMERS COMPRISING OILS OF PLANT AND/OR ANIMAL ORIGIN FOR THE PREPARATION OF BITUMEN/POLYMER COMPOSITIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.10.2009 FR 0904927**

(43) Date de publication de la demande:
**22.08.2012 Bulletin 2012/34**

(73) Titulaire: **TOTAL MARKETING SERVICES**
**92800 Puteaux (FR)**

(72) Inventeurs:
• **HARDERS, Sylvia**
  **25712 Buchholz (DE)**
• **DULAC, Guillaume**
  **F-69230 Saint-Genis Laval (FR)**

(74) Mandataire: **Corizzi, Valérie et al**
**PACT-IP**
**37, rue Royale**
**92210 Saint-Cloud (FR)**

(56) Documents cités:
**EP-A1- 1 696 002**    **EP-A2- 0 359 521**
**WO-A1-02/10284**    **WO-A1-02/10285**
**WO-A1-2008/077888**    **WO-A1-2010/055491**
**WO-A2-2006/012622**    **DD-A1- 210 919**
**FR-A1- 2 894 588**    **US-A- 5 397 825**
**US-A- 5 604 277**

• **AHMEDZADE ET AL: "Laboratory investigation of the properties of asphalt concrete mixtures modified with TOP-SBS", CONSTRUCTION AND BUILDING MATERIALS, ELSEVIER, NETHERLANDS, vol. 21, no. 3, 10 December 2006 (2006-12-10), pages 626-633, XP005882111, ISSN: 0950-0618, DOI: 10.1016/J.CONBUILDMAT.2005.12.003**

**Description**

**DOMAINE TECHNIQUE**

La présente invention appartient au domaine des bitumes, en particulier au domaine des compositions bitume/polymère utilisables en applications routières et/ou industrielles.

La présente invention concerne une solution-mère concentrée en polymère comprenant une huile acide d'origine végétale et/ou animale, son procédé de préparation et son utilisation pour préparer des compositions bitume/polymère et des revêtements bitumineux tels que les enrobés bitumineux, les enduits superficiels, les membranes ou des joints d'étanchéité, par exemple. La présente invention concerne également un procédé de préparation de compositions bitume/polymère à partir de ladite solution-mère. Les compositions bitume/polymère obtenues à partir de ce procédé peuvent être utilisées en applications routières notamment pour préparer des enrobés bitumineux. La présente invention concerne enfin un procédé de préparation d'enrobés bitumineux à partir de ladite solution-mère. Les enrobés bitumineux obtenus à partir de ce procédé peuvent être utilisés en applications routières pour préparer des couches de surface, de base et/ou de fondation.

**ART ANTERIEUR**

Le brevet EP0096638 décrit un procédé de préparation de compositions bitume/polymère réticulées notamment à partir d'une solution-mère consistant en une huile hydrocarbonée qui présente un intervalle de distillation à pression atmosphérique compris entre 100°C et 450°C, choisie parmi les coupes pétrolières de caractère aromatique, les coupes pétrolières de caractère naphténo-paraffinique, les coupes pétrolières de caractère naphténo-aromatique, les huiles de houille et les huiles d'origine végétale. La quantité de polymère dans la solution-mère peut représenter de 5% à 40% du poids de l'huile hydrocarbonée. La nature chimique et les caractéristiques physico-chimiques de l'huile d'origine végétale ne sont pas précisées.

Le brevet EP0582703 décrit un procédé de préparation de compositions bitume/polymère réticulées à partir d'une solution-mère consistant en une huile hydrocarbonée qui présente un intervalle de distillation à pression atmosphérique compris entre 100°C et 600°C, choisie parmi les coupes pétrolières de caractère aromatique, les coupes pétrolières de caractère paraffinique, les coupes pétrolières de caractère naphténo-paraffinique, les coupes pétrolières de caractère naphténo-aromatique, les huiles de houille et les huiles d'origine végétale. La quantité de polymère dans la solution-mère peut représenter de 5% à 40% du poids de l'huile hydrocarbonée. Encore une fois, la nature chimique et les caractéristiques physico-chimiques de l'huile d'origine végétale ne sont pas précisées.

La demande WO2007068461 décrit un liant bitumineux comprenant au moins un bitume, au moins un polymère réticulé ou non, fluxé à l'aide d'un fluxant qui est une huile d'origine végétale et en particulier, un ester méthylique d'huile de ricin. Le liant bitumineux fluxé à l'aide de cet ester méthylique d'huile de ricin, peut être préparé à partir d'une solution-mère comprenant au moins un polymère réticulé ou non et de l'ester méthylique d'huile de ricin. Le pourcentage en poids de polymère par rapport au poids total de la solution-mère est compris entre 1% et 30%. La société demanderesse s'est aperçue qu'une solution-mère préparée à partir d'une huile d'origine végétale telle que celle décrite dans la demande WO2007068461, c'est-à-dire un ester méthylique d'huile de ricin, n'est pas stable et gélifie au cours de son stockage beaucoup plus vite que les solutions-mères selon l'invention.

La demande WO2008077888 décrit une composition bitumineuse fluxée à l'aide d'un fluxant comprenant au moins un composé d'origine végétale et au moins une coupe hydrocarbonée issue du raffinage du pétrole brut. La composition bitumineuse fluxée peut être préparée à partir d'une solution-mère comprenant au moins un polymère et le fluxant à base du composé d'origine végétale et de la coupe hydrocarbonée issue du raffinage du pétrole brut. Les proportions massiques de fluxant et de polymère (fluxant/polymère) dans la solution mère varient de 10 :90 à 90 :10. Cette solution-mère a pour inconvénient d'être formulée à partir d'un mélange d'une huile d'origine pétrolière et d'une huile d'origine végétale et non entièrement à partir d'une huile d'origine végétale comme le sont les solutions-mères selon l'invention.

WO02/10285 divulgue un procédé permettant de préparer un concentré liquide destiné à être incoporé dans du bitume. Le concentré liquide comprend un ou plusieurs élastomères réticulés, de l'huile de tall ou d'autres acides gras et éventuellement de la gilsonite.

FR 2 894 588 divulgue un liant bitumineux comprenant au moins un bitume, au moins un fluxant et au moins un siccatif. Ce document divulgue également une solution-mère concentrée utile pour la préparation de telles compositions bitumineuses.

P. Ahmedzade et al., CONSTRUCTION AND BUILDING MATERIALS, 21, 2007, 626-633 divulgue la préparation de compositions de bitume modifiées par l'addition de poix d'huile de tall et d'un copolymère de type styrène-butadiène-styrène.

## RESUME DE L'INVENTION

Dans ces circonstances, le but de la présente invention est de proposer une nouvelle solution-mère formulée entièrement à partir d'une huile d'origine végétale et/ou animale, cette solution-mère étant très fortement concentrée en polymère, très peu visqueuse, stable lors de sa préparation et au cours de son stockage, ne gélifiant pas au cours de sa préparation et de son stockage et cela pendant plusieurs jours. Le problème de gélification des solutions-mères se pose lorsque celles-ci sont très fortement concentrées en polymère, qui plus est lorsque celles-ci sont très fortement concentrées en polymère réticulé. La gélification a pour conséquence l'impossibilité de manipuler et diluer les solutions-mères et par conséquent a pour conséquence l'impossibilité de formuler des compositions bitume/polymère, notamment réticulées à partir de ces solutions-mères. La société demanderesse s'est aperçue qu'une solution-mère très concentrée en polymère, peut être formulée entièrement à partir d'une huile d'origine végétale et/ou animale sans phénomène de gélification lorsque l'huile d'origine végétale et/ou animale est choisie parmi les huiles d'origine végétale et/ou animale de nature acide. Ainsi, la société demanderesse s'est aperçue que toutes les huiles d'origine végétale et/ou animale ne permettent pas la formulation d'une solution-mère très concentrée en polymère, stable et ne gélifiant pas, alors que la sélection d'une huile d'origine végétale et/ou animale particulière de nature acide conduit à des solutions-mères très concentrées en polymère, stables et ne gélifiant pas pendant plusieurs jours. La société demanderesse s'est aussi aperçue que les solutions-mères formulées à partir de ces huiles acides d'origine végétale et/ou animale sont peu visqueuses et donc pompables au moyen des systèmes conventionnels de pompage. Enfin, la société demanderesse s'est aperçue que ces solutions-mères, peuvent être facilement diluées dans du bitume, et une fois diluées dans du bitume, conduisent à des compositions bitume/polymère ayant une bonne consistance, notamment en terme de pénétrabilité et température Bille et Anneau, un bon retour élastique et de bonnes propriétés de traction. Les solutions-mères selon l'invention permettent ainsi la réduction des coûts de transport et de logistique, puisque ces solutions-mères stables et très fortement concentrées en polymère peuvent être stockées et transportées sans phénomène de gélification et diluées par la suite sur site de production dans du bitume. On évite ainsi le transport de grandes quantités de compositions bitume/polymère, le bitume se trouvant sur le site de production. Seules les solutions-mères stables et non gélifiées sont stockées et transportées.

## BREVE DESCRIPTION

L'invention concerne une solution-mère exempte d'huile d'origine pétrolière comprenant au moins une huile d'origine végétale et/ou animale, de 20% à 50% en masse de polymère, par rapport à la masse de la solution-mère, avec ou sans au moins un agent réticulant, ladite huile d'origine végétale et/ou animale étant acide, l'indice d'acide mesuré selon la norme NF EN ISO 660 étant compris entre 50 et 300 mg KOH/g. L'invention concerne plus particulièrement une solution-mère exempte d'huile d'origine pétrolière comprenant au moins une huile d'origine végétale et/ou animale, de 20% à 50% en masse d'un polymère qui est un copolymère réticulable d'hydrocarbure monovinyl aromatique et de diène conjugué ayant une masse moléculaire moyenne $M_w$ mesurée par chromatographie GPC avec un étalon de polystyrène selon la norme ASTM D3536 comprise entre 50 000 et 500 000 daltons, par rapport à la masse de la solution-mère, avec ou sans agent réticulant, ladite huile d'origine végétale et/ou animale étant acide, l'indice d'acide mesuré selon la norme NF EN ISO 660 étant compris entre 50 et 300 mg KOH/g et comprenant au moins 50% en masse d'acides gras sous forme libre, par rapport à la masse d'huile d'origine végétale et/ou animale.
De préférence, l'huile d'origine végétale et/ou animale comprend au moins 60% en masse d'acides gras sous forme libre, par rapport à la masse de l'huile d'origine végétale et/ou animale, plus préférentiellement au moins 70%, encore plus préférentiellement au moins 80%, encore plus préférentiellement au moins 90%, encore plus préférentiellement au moins 95%, encore plus préférentiellement au moins 99%.
De préférence, l'huile d'origine végétale et/ou animale a un indice d'acide mesuré selon la norme NF EN ISO 660 compris entre 60 et 250 mg KOH/g, plus préférentiellement entre 80 et 230, encore plus préférentiellement entre 100 et 200, encore plus préférentiellement entre 120 et 198, encore plus préférentiellement entre 140 et 196.
De préférence, l'huile d'origine végétale et/ou animale est choisie parmi les acides gras de l'huile de Tall ou de l'huile de colza, prises seules ou en mélange.
De préférence, la solution-mère comprend de 25% à 45% en masse de polymère, par rapport à la masse de la solution-mère, plus préférentiellement de 30% à 40%, encore plus préférentiellement de 32% à 35%
De préférence, la solution-mère comprend un polymère qui est un copolymère de styrène et de butadiène et un agent réticulant.
De préférence, le polymère est un copolymère de styrène et de butadiène ayant une teneur en motifs à doubles liaisons 1-2 issus du butadiène comprise entre 5% et 50% en masse, par rapport à la masse totale des motifs butadiène, de préférence entre 10% et 40%, plus préférentiellement entre 15% et 30%, encore plus préférentiellement entre 20% et 25%, avec ou sans agent réticulant.
L'invention concerne aussi un procédé de préparation d'une solution-mère telle que définie ci-dessus dans lequel on met en contact entre 120°C et 220°C pendant une période de 1 heure à 48 heures, au moins une huile acide d'origine végétale et/ou animale, au moins 20% en masse d'un polymère, par rapport à la masse de la solution-mère avec ou sans au moins un agent réticulant.

L'invention concerne aussi l'utilisation d'une solution-mère telle que définie ci-dessus pour préparer une composition bitume/polymère.

L'invention concerne aussi un procédé de préparation d'une composition bitume/polymère par dilution entre 120°C et 220°C, pendant une période de 10 minutes à 48 heures, d'une solution-mère obtenue telle que définie ci-dessus dans au moins un bitume, la concentration finale en polymère dans la composition bitume/polymère, étant comprise entre 0,5% et 15% en masse, par rapport à la masse de la composition bitume/polymère.

La présente demande décrit aussi une composition bitume/polymère susceptible d'être obtenue par le procédé ci-dessus.

La présente demande décrit aussi l'utilisation d'une composition bitume/polymère telle que définie ci-dessus en mélange avec des granulats pour fabriquer un enrobé bitumineux.

L'invention concerne aussi un procédé de préparation d'un enrobé bitumineux par dilution d'une solution-mère telle que définie ci-dessus dans au moins un bitume, entre 120°C et 220°C, pendant une période de 10 minutes à 48 heures, la concentration finale en polymère dans la composition bitume/polymère étant comprise entre 0,5% et 15% en masse, par rapport à la masse de la composition bitume/polymère, puis mélange de ladite composition bitume/polymère avec des granulats, entre 120°C et 220°C.

La présente demande décrit aussi un enrobé bitumineux susceptible d'être obtenue par le procédé ci-dessus.

La présente demande décrit aussi l'utilisation d'un enrobé bitumineux tel que défini ci-dessus pour fabriquer des couches de surface, de base et/ou de fondation.

## DESCRIPTION DETAILLEE

Pour obtenir une solution-mère très concentrée en polymère qui soit stable au stockage et qui ne gélifie pas, la solution-mère selon l'invention comprend au moins une huile d'origine végétale et/ou animale, cette huile d'origine végétale et/ou animale étant de nature acide. Par « nature acide », on entend une huile d'origine végétale et/ou animale comprenant une quantité importante d'acides gras sous forme libre et par conséquent une huile d'origine végétale et/ou animale ayant un indice d'acide élevé.

Il existe trois grandes catégories d'huiles, classifiées suivant leur origine : les huiles d'origine végétale, les huiles d'origine animale et les huiles d'origine minérale.

Par huile d'origine minérale, on entend des huiles obtenues par distillation de la houille, du pétrole ou de certains schistes bitumineux. La solution-mère selon l'invention est exempte d'huile d'origine minérale. En effet, il est souhaitable pour des raisons d'ordre environnemental, de formuler des solutions-mères comprenant uniquement des composés renouvelables tels que ceux d'origine végétale et/ou animale. La solution-mère selon l'invention, peut en cas de contamination, comprendre des traces ou des impuretés d'huile d'origine minérale. Dans ce cas, la solution-mère comprend moins de 5% en masse d'huile d'origine minérale, par rapport à la masse de la solution-mère, de préférence moins de 2%, plus préférentiellement moins de 1%, encore plus préférentiellement moins de 0,5%. De telles traces ou impuretés d'huile minérale, pourraient provenir d'une contamination par un mélange d'une autre nature mis en oeuvre dans les réacteurs ou bacs de stockage traditionnellement utilisés, cet autre mélange utilisant une huile d'origine minérale.

La solution-mère selon l'invention comprend donc uniquement de l'huile d'origine végétale, de l'huile d'origine animale ou un mélange des deux.

L'origine de l'huile d'origine végétale n'est pas déterminante pour l'invention, de même que celle de l'huile d'origine animale. Ainsi on pourra utiliser toute source connue d'huile d'origine végétale et/ou animale. A titre d'exemple, on peut citer les huiles d'abeille, d'amande, d'arachide, d'avocat, de babassu, de baleine, de baobab, de beurre, de bois de Chine, de bourrache, de cacao, de caméline, de carnauba, de carthame, de chaulmoogra, de cheval, de coco, de colza, de coprah, de coton, de crambe, de croton, de courge, de cuphea, d'euphoria lathyris, de germe de blé, d'hareng, d'illipé, de jojoba, de karité, de lanoline, de lesquerela, de lignite, de limanthes alba, de lin, de luzerne, de macadamia, de maïs, de menhaden, de morue, de moutarde, de noisette, de noix, de nouveau colza, de noyaux, d'oeillette, d'oie, d'oïtica, d'olive, d'onagre, d'os, de palme, de palmiste, de pépins de raisins, de périlla, de pied de boeuf, de requin, de ricin, de riz, de saindoux, de sardine, de seigle, de sésame, de soja, de suif, de Tall (Tall Oil) et/ou de tournesol prises seules ou en mélanges.

De préférence, l'huile d'origine végétale et/ou animale est une huile d'origine végétale et est de préférence choisie parmi les huiles de soja, de palme, de colza, de tournesol, de coton, de Tall car ces huiles sont produites en masse, avec une préférence pour l'huile de Tall qui provient du papier et qui n'est donc pas une huile destinée à l'industrie alimentaire.

Les huiles d'origine végétale et/ou animale peuvent être utilisées sous forme d'une huile brute, d'une huile semi raffinée, d'une huile raffinée ou être des co-produits d'une huile raffinée ou semi raffinée. Par huile raffinée ou semi raffinée, ou co-produits d'une huile raffinée ou semi raffinée, on entend des produits ayant subi un raffinage chimique et/ou physique. Les opérations de raffinage chimique et/ou physique incluent la démucilagination, le dégommage, la neutralisation, la décoloration, le séchage, la filtration, la désodorisation. Les huiles d'origine végétale et/ou animale selon l'invention pourront également avoir été modifiées par des réactions chimiques, telles que des réactions d'estérification ou d'hydrogénation.

Les huiles d'origine végétale et/ou animale selon l'invention sont principalement constituées d'acides gras saturés, mono-insaturés et/ou poly-insaturés. Les acides gras, selon l'origine de l'huile, seront des acides gras comprenant de 8 à 24 atomes de carbone, de préférence de 10 à 22 atomes de carbone, plus préférentiellement de 14 à 20 atomes de carbone, encore plus préférentiellement de 16 à 18 atomes de carbone. On préfère les huiles comprenant une majorité d'acides gras de 18 atomes de carbone, c'est-à-dire des huiles comprenant de 65% à 95% en masse d'acides gras de 18 atomes de carbone, par rapport à la masse de l'huile, de préférence de 70% à 90%, plus préférentiellement de 75% à 85%. Les huiles d'origine végétale et/ou animale selon l'invention pourront comprendre également des acides résiniques et/ou des produits neutres insaponifiables, ceci vaut particulièrement lorsque l'huile selon l'invention est choisie parmi les huiles de Tall.

De préférence, l'huile d'origine végétale et/ou animale selon l'invention est choisie parmi les acides gras de l'huile de Tall, appelé TOFA (Tall Oil Fatty Acids), coupe de l'huile de Tall très riche en acides gras sous forme libre et très acide. De même, de préférence, l'huile d'origine végétale et/ou animale est choisie parmi les acides gras de l'huile de colza, coupe de l'huile de colza très riche en acides gras sous forme libre et très acide.

Les acides gras des huiles d'origine végétale et/ou animale selon l'invention sont sous forme de triglycérides, de diglycérides, de monoglycérides et/ou sous forme libre. L'huile d'origine végétale et/ou animale selon l'invention étant de nature acide, elle comprend une quantité importante d'acides gras sous forme libre, c'est-à-dire des acides gras non estérifiés, ce qui permet à la solution-mère d'être particulièrement concentrée en polymère sans phénomène de gélification.

L'huile d'origine végétale et/ou animale présente dans la solution-mère selon l'invention comprend au moins 50% en masse d'acides gras sous forme libre, par rapport à la masse de ladite huile d'origine végétale et/ou animale.

De préférence, l'huile d'origine végétale et/ou animale selon l'invention comprend au moins 60% en masse d'acides gras sous forme libre, par rapport à la masse de ladite huile d'origine végétale et/ou animale, , plus préférentiellement au moins 70%, encore plus préférentiellement au moins 80%, encore plus préférentiellement au moins 90%, encore plus préférentiellement au moins 95%, encore plus préférentiellement au moins 99%.

De préférence, l'huile d'origine végétale et/ou animale selon l'invention comprend de 50% à 100% en masse d'acides gras sous forme libre, par rapport à la masse d'huile d'origine végétale et/ou animale, de préférence de 60% à 99%, plus préférentiellement de 70% à 95%, encore plus préférentiellement de 80% à 90%.

L'huile d'origine végétale et/ou animale selon l'invention possède un indice d'acide mesuré selon la norme NF EN ISO 660 compris entre 50 et 300 mg KOH/g, de préférence entre 60 et 250, plus préférentiellement entre 80 et 230, encore plus préférentiellement entre 100 et 200, encore plus préférentiellement entre 120 et 198, encore plus préférentiellement entre 140 et 196, encore plus préférentiellement entre 160 et 195, encore plus préférentiellement entre 180 et 190.

De préférence, l'huile d'origine végétale et/ou animale selon l'invention possède un indice d'iode mesuré selon la norme NF EN ISO 3961 compris entre 50 et 200 g $I_2$/100g, de préférence entre 80 et 150, plus préférentiellement entre 100 et 130.

La solution-mère selon l'invention comprend au moins un polymère qui est un copolymère réticulable d'hydrocarbure monovinyl aromatique et de diène conjugué. Des polymères utilisables dans les compositions selon l'invention sont les polymères classiquement utilisables dans le domaine des bitumes/polymères comme par exemple les polybutadiènes, les polyisoprènes, les caoutchoucs butyle, les polyacrylates, les polyméthacrylates, les polychloroprènes, les polynorbornènes, les polybutènes, les polyisobutènes, les polyéthylènes, les copolymères d'éthylène et d'acétate de vinyle, les copolymères d'éthylène et d'acrylate de méthyle, les copolymères d'éthylène et d'acrylate de butyle, les copolymères d'éthylène et d'anhydride maléique, les copolymères d'éthylène et de métacrylate de glycidyle, les copolymères d'éthylène et d'acrylate de glycidyle, les copolymères d'éthylène et de propène, les terpolymères éthylène/propène/diène (EPDM), les terpolymères acrylonitrile/butadiène/styrène (ABS), les terpolymères éthylène/acrylate ou méthacrylate d'alkyle/acrylate ou méthacrylate de glycidyle et notamment les terpolymères éthylène/acrylate de méthyle/méthacrylate de glycidyle et les terpolymères éthylène /acrylate ou méthacrylate d'alkyle/anhydride maléique et notamment les terpolymères éthylène/acrylate de butyle/anhydride maléique.

Les polymères préférés sont les copolymères à base de motifs diène conjugué et de motifs hydrocarbure monovinyl aromatique. En effet ces polymères peuvent être réticulés et par conséquent peuvent conduirent à des solutions-mères comprenant un polymère réticulé, puis à des compositions bitume/polymère réticulées ayant de bonnes propriétés de retour élastique et de traction.

Le diène conjugué du polymère selon l'invention est choisi parmi ceux comportant de 4 à 8 atomes de carbone, tel que le 1-3 butadiène (butadiène), le 2-méthyl-1,3-butadiène (isoprène), le 2,3-diméthyl-1,3-butadiène, le 1,3-pentadiène, le 1,2-hexadiène, le chloroprène, le butadiène carboxylé et/ou l'isoprène carboxylé. De préférence, le diène conjugué est le butadiène.

L'hydrocarbure monovinyl aromatique du polymère selon l'invention est choisi parmi le styrène, l'o-méthyl styrène, le p-méthyl styrène, le p-tert-butylstyrène, le 2,3 diméthyl- styrène, l'a-méthyl styrène, le vinyl naphtalène, le vinyl toluène et/ou le vinyl xylène. De préférence, l'hydrocarbure monovinyl est le styrène.

Plus particulièrement, le polymère selon l'invention consiste en un ou plusieurs copolymères choisis parmi les copolymères d'hydrocarbure monovinyl aromatique et de diène conjugué, en particulier de styrène et de butadiène, linéaires ou étoilés, sous forme de dibloc, tribloc et/ou multibranchés, éventuellement avec ou sans charnière statistique, de préférence avec charnière statistique. De préférence le polymère est un copolymère dibloc d'hydrocarbure monovinyl aromatique et de diène conjugué, en particulier un copolymère dibloc de styrène et de butadiène.

Le copolymère d'hydrocarbure monovinyl aromatique et de diène conjugué, en particulier de styrène et de butadiène, possède avantageusement une teneur pondérale en hydrocarbure monovinyl aromatique, en particulier en styrène allant de 5% à 50% en masse, par rapport à la masse de copolymère, de préférence de 20% à 40%.

Le copolymère d'hydrocarbure monovinyl aromatique et de diène conjugué, en particulier de styrène et de butadiène, possède avantageusement une teneur pondérale en diène conjugué, en particulier en butadiène allant de 50% à 95% en masse, par rapport à la masse de copolymère, de préférence de 60% à 80%.

Parmi ces motifs diène conjugué, on distingue les motifs à doubles liaisons 1-4 issus du diène conjugué et les motifs à doubles liaisons 1-2 issus du diène conjugué. Par motifs à doubles liaisons 1-4 issus du diène conjugué, on entend les motifs obtenus via une addition 1,4 lors de la polymérisation du diène conjugué. Par motifs à doubles liaisons 1-2 issus du diène conjugué, on entend les motifs obtenus via une addition 1,2 lors de la polymérisation du diène conjugué. Le résultat de cette addition 1,2 est une double liaison vinylique dite « pendante ».

De préférence, le copolymère d'hydrocarbure monovinyl aromatique et de diène conjugué, en particulier de styrène et de butadiène, possède une teneur en motifs à doubles liaisons 1-2 issus du diène conjugué, en particulier issus du butadiène, comprise entre 5% et 50% en masse, par rapport à la masse totale des motifs diène conjugué, en particulier butadiène, de préférence entre 10% et 40%, plus préférentiellement entre 15% et 30%, encore plus préférentiellement entre 20% et 25%, encore plus préférentiellement entre 18% et 23%. Grâce à ces motifs à doubles liaisons 1-2 issus du diène conjugué, en particulier grâce à ces motifs à doubles liaisons 1-2 issus du butadiène, le copolymère d'hydrocarbure monovinyl aromatique et de diène conjugué, en particulier le copolymère de styrène et de butadiène, peut être réticulé sans l'emploi d'agent réticulant. Le copolymère d'hydrocarbure monovinyl aromatique et de diène conjugué, en particulier le copolymère de styrène et de butadiène, est « auto-réticulant », les branches de copolymère sont réticulées, liées entre elles via ces doubles liaisons vinyliques dite « pendantes ». L'utilisation d'un copolymère ayant une quantité importante de doubles liaisons vinyliques dites « pendantes » permet de se passer de l'utilisation d'agent réticulant à base de soufre par exemple et par conséquent permet une réticulation sans dégagements d'hydrogène sulfuré.

Le copolymère d'hydrocarbure monovinyl aromatique et de diène conjugué, en particulier de styrène et de butadiène, a une masse moléculaire moyenne $M_w$ comprise entre 50 000 et 500 000 daltons, de préférence entre 50 000 et 200 000, plus préférentiellement entre 80 000 et 150 000, encore plus préférentiellement entre 100 000 et 130 000, encore plus préférentiellement entre 110 000 et 120 000. La masse moléculaire du copolymère est mesurée par chromatographie GPC avec un étalon polystyrène selon la norme ASTM D3536.

La solution-mère selon l'invention grâce à la présence de l'huile d'origine végétale et/ou animale au caractère acide, peut être beaucoup plus concentrée en polymère que les solutions-mères de l'art antérieur et ce sans gélifier au cours de leur préparation et de leur stockage.

La solution-mère selon l'invention comprend au moins 20% en masse de polymère, par rapport à la masse de la solution-mère, de préférence au moins 30%, et selon un mode de réalisation plus préférentiellement au moins 40%.

La solution-mère selon l'invention comprend de 20% à 50% en masse de polymère, par rapport à la masse de la solution-mère, de préférence de 25% à 45%, plus préférentiellement de 30% à 40%, encore plus préférentiellement de 32% à 35% et ce sans phénomène de gélification lors de sa préparation et/ou de son stockage.

De préférence, le polymère est choisi parmi les polymères réticulables tels que les copolymères de styrène et de butadiène, c'est-à-dire des polymères que l'on peut réticuler en leur ajoutant des agents réticulants tels que le soufre ou des polymères qui soumis à des conditions particulières par exemple de température, pourront passer d'un état non réticulé à un état réticulé, pour obtenir des compositions bitume/polymère réticulées ayant de bonnes propriétés de consistance (pénétrabilité et température Bille et Anneau), de retour élastique et de traction. Les polymères réticulables sont donc au départ non réticulés, on ne préfère donc pas les polymères déjà réticulés tels que les poudrettes de caoutchouc. Dans ce cas, un agent réticulant peut être utilisé pour assurer et/ou faciliter la réticulation. Cet agent réticulant peut être de nature très variée et est choisi en fonction du ou des type(s) de polymère(s) contenu(s) dans la solution-mère selon l'invention.

De préférence, l'agent réticulant est choisi parmi le soufre et les polysulfures d'hydrocarbyle, pris seuls ou en mélange, en présence éventuels d'accélérateurs de vulcanisation donneurs de soufre ou non donneurs de soufre, pris seuls ou en mélange.

Le soufre est notamment du soufre en fleur ou encore du soufre cristallisé alpha.

Les polysulfures d'hydrocarbyle sont par exemple, choisis parmi les disulfures de dihexyle, les disulfures de dioctyle, les disulfures de didodécyle, les disulfures de ditertiododécyle, les disulfures de dihexadécyle, les trisulfures de dihexyle, les trisulfures de dioctyle, les trisulfures de dinonyle, les trisulfures de ditertiododécyle, les trisulfures de dihexadécyle, les trisulfures de diphényle, les trisulfures de dibenzyle, les tétrasulfures de dihexyle, les tétrasulfures de dioctyle, les tétrasulfures de dinonyle, les tétrasulfures de ditertiododécyle, les tétrasulfures de dihexadécyle, les tétrasulfures de diphényle, les tétrasulfures d'orthotolyle, les tétrasulfures de dibenzyle, les pentasulfures de dihexyle, les pentasulfures de dioctyle, les pentasulfures de dinonyle, les pentasulfures de ditertiododécyle, les pentasulfures de dihexadécyle, les pentasulfures de dibenzyle ou les pentasulfures de diallyle, pris seuls ou en mélange.

Les accélérateurs de vulcanisation donneurs de soufre, peuvent être choisis parmi les polysulfures de thiurame, comme par exemple, les disulfures de tétrabutylthiurame, les disulfures de tétraéthylthiurame et les disulfures de tétraméthylthiurame, les disulfures de dipentaméthylènethiurame, les tétrasulfures de dipentaméthylènethiurame ou les hexasulfures de dipentaméthylènethiurame, pris seuls ou en mélange.

Les accélérateurs de vulcanisation non donneurs de soufre utilisables selon l'invention peuvent être choisis notamment parmi le mercaptobenzothiazole et ses dérivés, les dithiocarbamates et ses dérivés, et les monosulfures de thiurame et ses dérivés, pris seuls ou en mélange. On peut citer comme exemples d'accélérateurs de vulcanisation non donneurs de soufre, le 2-mercaptobenzothiazole de zinc, le benzothiazolethiolate de zinc, le benzothiazolethiolate de sodium, le disulfure de benzothiazyle, le benzothiazolethiolate de cuivre, le N, N'-diéthylthiocarbamylesulfure de benzothiazyle et les benzothiazolesulfénamides comme le 2-benzothiazolediéthylsulfénamide, le 2-benzothiazolepentaméthylènesulfénamide, le 2-benzothiazolecyclohexylsulfénamide, le N-oxydiéthylène 2-benzothiazolesulfénamide, le N-oxydiéthylène 2-benzothiazolethiosulfénamide, le 2-benzothiazoledicyclohexylsulfénamide, le 2-benzothiazolediisopropylsulfénamide, le 2-benzothiazoletertiobutylsulfénamide, le diméthyldithiocarbamate de bismuth, le diamyldithiocarbamate de cadmium, le diéthyldithiocarbamate de cadmium, le diméthyldithiocarbamate de cuivre, le diamyldithiocarbamate de plomb, le diméthyldithiocarbamate de plomb, le pentaméthylènedithiocarbamate de plomb, le diméthyldithiocarbamate de sélénium, le diéthyldithiocarbamate de tellure, le diamyldithiocarbamate de zinc, le dibenzyldithiocarbamate de zinc, le diéthyldithiocarbamate de zinc, le diméthyldithiocarbamate de zinc, le dibutyldithiocarbamate de zinc, le pentaméthylènedithiocarbamate de zinc, le monosulfure de dipentaméthylènethiurame, le monosulfure de tétrabutylthiurame, le monosulfure de tétraéthylthiurame et le monosulfure de tétraméthylthiurame, pris seuls ou en mélange.

L'agent réticulant peut aussi être choisi parmi les composés de formule générale HS-R-SH où R représente un groupe hydrocarboné, saturé ou insaturé, linéaire ou ramifié, de 2 à 40 atomes de carbones, comprenant éventuellement un ou plusieurs hétéroatomes, tels que l'oxygène. Parmi les composés répondant à cette formule générale, on peut citer par exemple, le 1,2 éthanedithiol, le 1,3 propanedithiol, le 1,4 butanedithiol, le 1,5 pentanedithiol, le 1,6 hexanedithiol, le 1,7 heptanedithiol, le 1,8 octanedithiol, le bis-(2-mercaptoéthyl)éther, le bis-(3-mercaptoéthyl)éther, le bis-(4-mercaptoéthyl)éther, le (2-mercaptoéthyl) (3-mercaptobutyl)éther, le (2-mercaptoéthyl) (4-mercaptobutyl)éther, le 1,8-dimercapto-3,6-dioxaoctane, le benzène-1,2-dithiol, le benzène-1,3-dithiol, le benzène-1,4-dithiol ou le toluène-3,4-dithiol, le biphenyl-4,4'-dithiol, pris seuls ou en mélange.

On utilise en général une quantité d'agent réticulant entre 0,05% et 5% en masse, par rapport à la masse de solution-mère, de préférence entre 0,1% et 2%, plus préférentiellement entre 0,2% et 1%, encore plus préférentiellement entre 0,3% et 0,5%.

De préférence, les quantités de polymère et d'agent réticulant sont fixées de manière à obtenir un ratio polymère/agent réticulant compris entre 50 :1 et 150 :1, de préférence entre 60 :1 et 100 :1, plus préférentiellement entre 70 :1 et 80 :1.

Lorsqu'on n'utilise pas d'agent réticulant, on utilise de préférence un copolymère d'hydrocarbure monovinyl aromatique et de diène conjugué, en particulier un copolymère de styrène et de butadiène, possédant une teneur en motifs à doubles liaisons 1-2 issus du diène conjugué, en particulier une teneur en motifs à doubles liaisons 1-2 issus du butadiène, telle que définie ci-dessus. On emploiera donc un copolymère d'hydrocarbure monovinyl aromatique et de diène conjugué, en particulier un copolymère de styrène et de butadiène, avec un des agents réticulants décrits ci-dessus ou bien uniquement un copolymère d'hydrocarbure monovinyl aromatique et de diène conjugué, en particulier un copolymère de styrène et de butadiène possédant la quantité particulière définie ci-dessus de motifs à doubles liaisons 1-2 issus du diène conjugué, en particulier de motifs à doubles liaisons 1-2 issus du butadiène, ou bien un copolymère d'hydrocarbure monovinyl aromatique et de diène conjugué, en particulier un copolymère de styrène et de butadiène, possédant la quantité particulière définie ci-dessus de motifs à doubles liaisons 1-2 issus du diène conjugué, en particulier de motifs à doubles liaisons 1-2 issus du butadiène en combinaison éventuelle avec un des avec un des agents réticulants décrits ci-dessus pour renforcer, accélérer la réticulation.

Par ailleurs, la société demanderesse s'est aperçu que le choix de cette huile particulière de nature acide permettait de favoriser et d'accélérer la réticulation du polymère dans la solution-mère. Des compositions bitume/polymère préparées à partir de solutions-mères à base d'huiles d'origine végétale et/ou animale de nature non acide, de polymère et d'agent réticulant, n'ont pas présenté les propriétés élastiques caractéristiques des compositions bitume/polymère réticulées.

On peut également ajouter à la solution-mère selon l'invention, des dopes d'adhésivité et/ou des agents tensioactifs. Ils sont choisis parmi les dérivés d'alkylamines, les dérivés d'alkylpolyamines, les dérivés d'alkylamidopolyamines et les dérivés de sels d'ammonium quaternaire, pris seuls ou en mélange. Les plus utilisés sont les propylènes-diamines de suif, les amido-amines de suif, les ammoniums quaternaires obtenus par quaternisation des propylènes-diamines de suif, les propylènes-polyamines de suif. La quantité de dopes d'adhésivité et/ou des agents tensioactifs dans la solution-mère selon l'invention est comprise entre 0,2% et 2% en masse, par rapport à la masse de la solution-mère, de préférence entre 0,5% et 1%.

Pour fabriquer la solution-mère selon l'invention, l'huile acide d'origine végétale et/ou animale est tout d'abord portée à une température comprise entre 120°C et 220°C, de préférence entre 140°C et 200°C, plus préférentiellement entre 160°C et 180°C. On ajoute ensuite, éventuellement sous agitation, et de préférence sous agitation, dans les gammes de température précitées, au moins un polymère tel que défini ci-dessus et éventuellement au moins un agent réticulant tel que défini ci-dessus. Le mélange est maintenu dans les gammes de température précitées, pendant une durée de 1 heure à 48 heures, de préférence de 2 heures à 24 heures, plus préférentiellement de 4 heures à 16 heures, encore plus préférentiellement de 6 heures à 12 heures, encore plus préférentiellement de 8 heures à 10 heures.

Pour obtenir au final des compositions bitume/polymère réticulées, on utilise suivant le procédé décrit au paragraphe précédent, soit un copolymère d'hydrocarbure monovinyl aromatique et de diène conjugué, en particulier un copolymère de styrène et de butadiène et un agent réticulant tels que définis ci-dessus, soit un copolymère d'hydrocarbure monovinyl aromatique et de diène conjugué, en particulier un copolymère de styrène et de butadiène ayant en particulier les quantités de motifs à doubles liaisons 1-2 issus du diène conjugué, en particulier de motifs à doubles liaisons 1-2 issus du butadiène définies ci-dessus avec ou sans agent réticulant (ce copolymère pouvant s'auto-réticuler seul, la réticulation pouvant être accélérée ou augmentée par l'ajout d'agent réticulant), c'est-à-dire des quantités de motifs à doubles liaisons 1-2 issus du diène conjugué, en particulier de motifs à doubles liaisons 1-2 issus du butadiène, comprises entre 5% et 50% en masse, par rapport à la masse totale des motifs diène conjugué, en particulier par rapport à la masse totale des motifs butadiène, de préférence entre 10% et 40%, plus préférentiellement entre 15% et 30%, encore plus préférentiellement entre 20% et 25%, encore plus préférentiellement entre 18% et 23%. Les conditions de température et durée précitées et les choix de l'huile, du polymère et/ou de l'agent réticulant, permettent la réticulation du polymère dans la solution-mère qui peut aussi se poursuivre et se terminer lors de la dilution de la solution-mère.

Une fois la solution-mère préparée, elle peut être stockée plusieurs jours sans gélification et enfin être diluée dans un bitume pour préparer des compositions bitume/polymère, de préférence réticulées. Le bitume est tout d'abord porté à une température comprise entre 120°C et 220°C, de préférence entre 140°C et 200°C, plus préférentiellement entre 160°C et 180°C. On ajoute ensuite la solution-mère selon l'invention, éventuellement sous agitation, et de préférence sous agitation, dans les gammes de température précitées. Le mélange est maintenu dans les gammes de température précitées, pendant une durée de 10 minutes à 48 heures, de préférence de 30 minutes à 24 heures, plus préférentiellement de 1 heure à 16 heures, encore plus préférentiellement de 2 heures à 12 heures, encore plus préférentiellement de 4 heures à 8 heures.

Le bitume utilisable pour diluer la solution-mère selon l'invention, peut être un bitume issu de différentes origines. Le bitume utilisable selon l'invention peut être choisi parmi les bitumes d'origine naturelle, comme ceux contenus dans des gisements de bitume naturel, d'asphalte naturel ou les sables bitumineux. Le bitume utilisable selon l'invention peut aussi être un bitume ou un mélange de bitumes provenant du raffinage du pétrole brut tels que des bitumes de distillation directe ou des bitumes de distillation sous pression réduite ou encore des bitumes soufflés ou semi-soufflés, des résidus de désasphaltage au propane ou au pentane, des résidus de viscoréduction, ces différentes coupes pouvant être prises seules ou en mélange. Les bitumes utilisés peuvent également être des bitumes fluxés par addition de solvants volatils, de fluxants d'origine pétrolière, de fluxants carbochimiques et/ou de fluxants d'origine végétale. On peut aussi utiliser des bitumes synthétiques également appelés bitumes clairs, pigmentables ou colorables. Le bitume peut être un bitume d'origine naphténique ou paraffinique, ou un mélange de ces deux bitumes.

Les quantités de solution-mère et de bitume mises en jeu pour préparer les compositions bitume/polymère seront choisies en fonction de la quantité de polymère présente dans la solution-mère et de la quantité de polymère finale désirée dans la composition bitume/polymère. La composition bitume/polymère comprend généralement de 0,5% à 15% en masse de polymère, par rapport à la masse de la composition bitume/polymère, de préférence de 1% à 10%, plus préférentiellement de 2% à 8%, encore plus préférentiellement de 3% à 5%. Ainsi par exemple pour une solution-mère comprenant 40% de polymère, et pour obtenir une composition bitume/polymère comprenant 4% de polymère, 1 partie de la solution-mère sera diluée dans 9 parties de bitume.

Une fois la composition bitume/polymère préparée, celle-ci peut être mélangée avec des granulats pour fournir des enrobés bitumineux qui serviront à fabriquer des couches de surface, de base et/ou de fondation pour l'industrie routière. Le mélange de la composition bitume/polymère et des granulats a lieu entre 120°C et 220°C, de préférence entre 140°C et 200°C, plus préférentiellement entre 120°C et 180°C, encore plus préférentiellement entre 140°C et 160°C. On pourra aussi préparer à partir des compositions bitume/polymère des enduits superficiels, des membranes, des joints d'étanchéité.

**EXEMPLES**

On prépare des solutions-mères témoins et des solutions-mères selon l'invention à partir :

- d'un copolymère dibloc de styrène et de butadiène comprenant 40% en masse de styrène, par rapport à la masse du copolymère, et 6% de motifs à double liaison 1-2 issus du butadiène, par rapport à la masse de butadiène et une masse moléculaire $Mw$ de 97000 daltons,
- de soufre en fleur, et
- de différentes huiles :

  - une huile de tournesol ($H_1$) dont la majorité des acides gras est sous forme de triglycérides, l'huile comprenant au maximum 1,5% en masse d'acides gras sous forme libre, par rapport à la masse d'huile, et dont l'indice d'acide est au maximum égal à 1 mg KOH/g,
  - une huile de lin ($H_2$) dont la majorité des acides gras est sous forme de triglycérides, l'huile comprenant au maximum 1,5% en masse d'acides gras sous forme libre, par rapport à la masse d'huile, et dont l'indice d'acide est au maximum de 9 mg KOH/g,
  - un ester méthylique d'huile de ricin ($H_3$) dont au moins 75% en masse des acides gras sont sous forme d'ester méthylique, par rapport à la masse d'huile, et dont l'indice d'acide est égal à 5 mg KOH/g, cette huile correspondant à l'huile décrite dans la demande WO2007068461,
  - un ester d'huile de soja ($H_4$) dont la quantité d'acides gras sous forme libre est de 2 à 3% en masse, par rapport à la masse d'huile, et dont l'indice d'acide est compris entre 4 et 6 mg KOH/g,
  - une huile acide de colza ($H_5$) comprenant 54% en masse d'acides gras sous forme libre, par rapport à la masse d'huile, et dont l'indice d'acide est de 108 mg KOH/g,
  - un Tall Oil Fatty Acid ($H_6$), c'est-à-dire une coupe très riche en acides gras issue de la distillation du Tall Oil, comprenant 99,6% en masse d'acides gras sous forme libre, par rapport à la masse d'huile, et dont l'indice d'acidité est compris entre 186 et 190 mg KOH/g.

Le mode opératoire utilisé pour préparer les solutions-mères témoins et les solutions-mères selon l'invention est le suivant :
Dans un réacteur maintenu à 185°C et sous agitation à 300 tours/min, on introduit une des huiles $H_1$ à $H_6$ et le copolymère décrit ci-dessus. Le contenu du réacteur est maintenu à 185°C sous agitation à 300 tours/min pendant 14 heures. On introduit ensuite dans le réacteur le soufre en fleur. Le contenu du réacteur est maintenu à 185°C sous agitation à 300 tours/min pendant 12 heures.

Les solutions-mères témoins sont les solutions-mères $SM_1$ à $SM_4$, préparées respectivement à partir des huiles $H_1$ à $H_4$. La solution-mère témoin $SM_1$ comprend 25% en masse de copolymère, 0,36% en masse de soufre en fleur et 74,64% en masse d'huile $H_1$, par rapport à la masse de solution-mère. Les solutions-mères témoins $SM_2$ à $SM_4$ comprennent respectivement 40% en masse de copolymère, 0,57% en masse de soufre en fleur et 59,43% en masse d'huile $H_2$ à $H_4$, par rapport à la masse des solutions-mères.

Pour les solutions-mères témoins $SM_1$ et $SM_2$ préparées respectivement à partir des huiles $H_1$ et $H_2$, on a observé une prise en masse, une gélification dans le réacteur des solutions-mères. Aucune mesure ne peut être effectuée sur ces deux solutions-mères, c'est pourquoi les solutions-mères témoins $SM_1$ et $SM_2$ ne figurent pas dans le Tableau I ci-dessous.

Les solutions-mères selon l'invention sont les solutions-mères $SM_5$, $SM_{5bis}$, $SM_6$ et $SM_{6bis}$, préparées respectivement à partir des huiles $H_5$ et $H_6$ à deux concentrations différentes en polymère Les solutions-mères $SM_5$ et $SM_6$ contiennent 25% en masse de copolymère, 0,36% en masse de soufre en fleur et 74,64% en masse d'huile $H_5$ ou $H_6$, par rapport à la masse des solutions-mères. Les solutions-mères $SM_{5bis}$ et $SM_{6bis}$ contiennent 40% en masse de copolymère, 0,57% en masse de soufre en fleur et 59,43% en masse d'huile $H_5$ ou $H_6$, par rapport à la masse des solutions-mères.

Pour les solutions-mères qui n'ont pas gélifié dans le réacteur, on détermine si leur viscosité à 180°C leur permet d'être pompables à une telle température et on évalue aussi leur stabilité à la gélification à 180°C dans une boîte fermée placée dans une étuve, et ce pendant une durée de 14 jours. Une échelle de S0 à S4 permet de décrire si la solution-mère gélifie ou non lors du stockage. Un état « S0 » signifie que la solution-mère est fluide, un état « S1 » signifie que la solution-mère est liquide, un état « S2 » signifie que la solution-mère est visqueuse, un état « S3 » signifie que la solution-mère est très visqueuse, un état « S4 » signifie que la solution-mère est solide, c'est-à-dire a complètement gélifié, qu'elle a pris en masse.

Le Tableau I ci-dessous présente les caractéristiques physiques des solutions-mères témoins SM$_3$ et SM$_4$ et des solutions-mères selon l'invention SM$_5$, SM$_{5bis}$, SM$_6$ et SM$_{6b}$i$_s$.

Tableau I

|  | SM$_3$ | SM$_4$ | SM$_5$ | SM$_{5bis}$ | SM$_6$ | SM$_{6bis}$ |
|---|---|---|---|---|---|---|
| Viscosité à 180°C (Pa.s$^{-1}$) | 0,3 | 0,4 | 0,2 | 1,7 | 0,2 | 0,4 |
| Stockage 1 jour | S4 | S4 | S0 | S1 | S0 | S1 |
| Stockage 5 jours | - | - | S0 | S2 | S0 | S2 |
| Stockage 7 jours | - | - | S3 | S4 | S0 | S4 |
| Stockage 14 jours | - | - | S4 | - | S1 | - |

On constate que toutes les solutions-mères sont pompables, la limite de pompabilité à 180°C étant de 2 Pa.s$^{-1}$.

Pour les solutions-mères témoins SM$_3$ et SM$_4$ préparées respectivement à partir des huiles H$_3$ et H$_4$, on observe une gélification au cours du stockage au bout de 24 heures. Les solutions-mères selon l'invention sont beaucoup moins sensibles à la gélification, puisqu'au bout de 24 heures elles sont toutes fluides (S0) ou liquides (S1). La gélification ne s'observe que au bout de 7 jours pour les solutions-mères SM$_{5bis}$ et SM$_{6bis}$, que au bout de 14 jours pour la solution-mère SM$_5$ et la solution-mère SM$_6$ est encore liquide au bout de 14 jours.

Les solutions-mères selon l'invention SM$_{5bis}$, SM$_6$ et SM$_{6bis}$, qui n'ont pas gélifié, sont ensuite diluées dans un bitume de pénétrabilité égale à 14 1/10 mm et de température Bille et Anneau égale à 64,6°C pour fournir des compositions bitume/polymère réticulées (mélanges des solutions-mères et du bitume) C$_{5bis}$, C$_6$, C$_{6bis}$. Le mode opératoire utilisé pour diluer les solutions-mères selon l'invention SM$_{5bis}$, SM$_6$ et SM$_{6bis}$ est le suivant :

Dans un réacteur maintenu à 185°C et sous agitation à 300 tours/min, on introduit un bitume. Le contenu du réacteur est maintenu à 185°C sous agitation à 300 tours/min pendant 10 minutes, on introduit ensuite dans le réacteur la solution-mère. Le contenu du réacteur est maintenu à 185°C sous agitation à 300 tours/min pendant 1 heure.

On ajoute une quantité de bitume de façon à obtenir une concentration en polymère dans les compositions bitume/polymère C$_{5bis}$, C$_6$ et C$_{6bis}$ de 3,5% en masse par rapport à la masse de la composition bitume/polymère.

Pour les compositions bitume/polymère Cs$_{bis}$, C$_6$ et C$_{6bis}$, on détermine les caractéristiques suivantes :

(1) pénétrabilité à 25°C notée P$_{25}$ (1/10 mm) mesurée selon la norme EN 1426,

(2) température Bille et Anneau notée TBA (°C) mesurée selon la norme EN 1427,

(3) indice de Pfeiffer noté IP défini par la formule ci-dessus :

$$IP = \frac{1952 - 500 \times \log(P_{25}) - 20 \times TBA}{50 \times \log(P_{25}) - TBA - 120}$$

(4) retour élastique noté RE (%) mesuré à 25°C selon la norme NF EN 13398,

(5) contrainte seuil notée σ seuil (MPa), contrainte à l'élongation maximale notée σ ε max (MPa), élongation seuil notée ε seuil (%), élongation maximale notée ε max (%), énergie conventionnelle d'élongation à 400% notée E 400% (J/cm$^2$), énergie totale notée E totale (J), mesurées selon la norme NF EN 13587, l'essai de traction étant réalisé à 5°C avec une vitesse d'étirement de 100 mm/minute,

(6) viscosité dynamique mesurée selon la norme NF EN 13702-1,

(7) stabilité au stockage, essai de 3 jours à 180°C selon la norme NF EN 13399, les résultats sont consignés dans le Tableau II ci-dessous.

Tableau II

|  | C$_{5bis}$ | C$_6$ | C$_{6bis}$ |
|---|---|---|---|
| P$_{25}$(1) | 34 | 72 | 31 |
| TBA(2) | 60,4 | 53,8 | 64,0 |
| IP(3) | 0,21 | 0,7 | 0,7 |

(suite)

|  | $C_{5bis}$ | $C_6$ | $C_{6bis}$ |
|---|---|---|---|
| Retour élastique [4] | 67 | 51 | 65 |
| σ seuil [5] | 1,85 | 1,22 | 1,13 |
| σ ε max [5] | 0,24 | 0,10 | 0,16 |
| ε seuil [5] | 14,13 | 12,70 | 15,38 |
| ε max [5] | 564 | 430 | 520 |
| E 400% [5] | 13,18 | 10,22 | 13,12 |
| E total [5] | 2,05 | 0,98 | 1,78 |
| Viscosité à 120°C [6] | 9,8 | - | - |
| Viscosité à 130°C [6] | 5,8 | - | - |
| Viscosité à 140°C [6] | 3,6 | - | - |
| Viscosité à 150°C [6] | 2,4 | - | - |
| Viscosité à 160°C [6] | 1,7 | - | - |
| Viscosité à 170°C [6] | 1,3 | - | - |
| Viscosité à 180°C [6] | 1,0 | 0,6 | 1,2 |
| Viscosité à 190°C [6] | 0,8 | - | - |
| Δ $P_{25}$, 3 jours, 180°C [7] | 1 | - | - |
| Δ TBA, 3 jours, 180°C [7] | 0,6 | - | - |

On constate que les compositions bitume/polymère réticulées selon l'invention $C_{5bis}$, $C_6$ et $C_{6bis}$ ont de bonnes propriétés en termes de consistance, susceptibilité thermique, retour élastique, traction, viscosité et stabilité au stockage.

## Revendications

1.    Solution-mère exempte d'huile d'origine pétrolière comprenant au moins une huile d'origine végétale et/ou animale, de 20% à 50% en masse d'un polymère qui est un copolymère réticulable d'hydrocarbure monovinyl aromatique et de diène conjugué ayant une masse moléculaire moyenne $M_w$ mesurée par chromatographie GPC avec un étalon polystyrène selon la norme ASTM D3536 comprise entre 50 000 et 500 000 daltons, par rapport à la masse de la solution-mère, avec ou sans au moins un agent réticulant, ladite huile d'origine végétale et/ou animale étant acide, l'indice d'acide mesuré selon la norme NF EN ISO 660 étant compris entre 50 et 300 mg KOH/g et comprenant au moins 50% en masse d'acides gras sous forme libre, par rapport à la masse d'huile d'origine végétale et/ou animale.

2.    Solution-mère selon la revendication 1 dans laquelle l'huile d'origine végétale et/ou animale comprend au moins 60% en masse d'acides gras sous forme libre, par rapport à la masse de l'huile d'origine végétale et/ou animale.

3.    Solution-mère selon la revendication 1 ou 2 dans laquelle l'huile d'origine végétale et/ou animale a un indice d'acide mesuré selon la norme NF EN ISO 660 compris entre 60 et 250 mg KOH/g.

4.    Solution-mère selon la revendication 1, 2 ou 3 dans laquelle l'huile d'origine végétale et/ou animale est choisie parmi les acides gras de l'huile de Tall ou de l'huile de colza, prises seules ou en mélange.

5.    Solution-mère selon l'une quelconque des revendications 1 à 4 comprenant de 25% à 45% en masse de copolymère réticulable d'hydrocarbure monovinyl aromatique et de diène conjugué ayant une masse moléculaire moyenne $M_w$ mesurée par chromatographie GPC avec un étalon polystyrène selon la norme ASTM D3536 comprise entre 50 000 et 500 000 daltons, par rapport à la masse de la solution-mère.

6.    Solution-mère selon l'une quelconque des revendications 1 à 5, dans laquelle le copolymère réticulable d'hydrocarbure monovinyl aromatique et de diène conjugué ayant une masse moléculaire moyenne $M_w$ mesurée par chromatographie GPC avec un étalon polystyrène selon la norme ASTM D3536 comprise entre 50 000 et 500 000 daltons est un copolymère de styrène et de butadiène et un agent réticulant.

7. Solution-mère selon l'une quelconque des revendications 1 à 5, dans laquelle le copolymère réticulable d'hydrocarbure monovinyl aromatique et de diène conjugué ayant une masse moléculaire moyenne $M_w$ mesurée par chromatographie GPC avec un étalon polystyrène selon la norme ASTM D3536 comprise entre 50 000 et 500 000 daltons est un copolymère de styrène et de butadiène ayant une teneur en motifs à doubles liaisons 1-2 issus du butadiène comprise entre 5% et 50% en masse, par rapport à la masse totale des motifs butadiène, avec ou sans agent réticulant.

8. Procédé de préparation d'une solution-mère selon l'une quelconque des revendications 1 à 7 dans lequel on met en contact entre 120°C et 220°C pendant une période de 1 heure à 48 heures, au moins une huile acide d'origine végétale et/ou animale, au moins 20% en masse d'un polymère qui est un copolymère réticulable d'hydrocarbure monovinyl aromatique et de diène conjugué ayant une masse moléculaire moyenne $M_w$ mesurée par chromatographie GPC avec un étalon polystyrène selon la norme ASTM D3536 comprise entre 50 000 et 500 000 daltons, par rapport à la masse de la solution-mère avec ou sans au moins un agent réticulant.

9. Utilisation d'une solution-mère selon l'une quelconque des revendications 1 à 7 pour préparer une composition bitume/polymère.

10. Procédé de préparation d'une composition bitume/polymère par dilution entre 120°C et 220°C, pendant une période de 10 minutes à 48 heures, d'une solution-mère obtenue selon l'une quelconque des revendications 1 à 7 dans au moins un bitume, la concentration finale en polymère dans la composition bitume/polymère, étant comprise entre 0,5% et 15% en masse, par rapport à la masse de la composition bitume/polymère.

11. Procédé de préparation d'un enrobé bitumineux par dilution d'une solution-mère obtenue selon l'une quelconque des revendications 1 à 7 dans au moins un bitume, entre 120°C et 220°C, pendant une période de 10 minutes à 48 heures, la concentration finale en polymère dans la composition bitume/polymère étant comprise entre 0,5% et 15% en masse, par rapport à la masse de la composition bitume/polymère, puis mélange de ladite composition bitume/polymère avec des granulats, entre 120°C et 220°C.

**Patentansprüche**

1. Stammlösung, die frei von aus Erdöl stammendem Öl ist, umfassend mindestens ein Öl pflanzlichen und/oder tierischen Ursprungs, 20 bis 50 Massen-% eines Polymers, bei dem es sich um ein vernetzbares Copolymer aus aromatischem Monovinylkohlenwasserstoff und konjugiertem Dien mit einer mittels GPC-Chromatographie mit einem Polystyrol-Standard gemäß der Norm ASTM D3536 gemessenen mittleren Molekülmasse $M_w$ zwischen 50 000 und 500 000 Dalton handelt, bezogen auf die Masse der Stammlösung, mit oder ohne mindestens ein Vernetzungsmittel, wobei das Öl pflanzlichen und/oder tierischen Ursprungs sauer ist, wobei die gemäß der Norm NF EN ISO 660 gemessene Säurezahl zwischen 50 und 300 mg KOH/g beträgt, und mindestens 50 Massen-% Fettsäuren in freier Form, bezogen auf die Masse des Öls pflanzlichen und/oder tierischen Ursprungs.

2. Stammlösung nach Anspruch 1, wobei das Öl pflanzlichen und/oder tierischen Ursprungs mindestens 60 Massen-% Fettsäuren in freier Form, bezogen auf die Masse des Öls pflanzlichen und/oder tierischen Ursprungs, umfasst.

3. Stammlösung nach Anspruch 1 oder 2, wobei das Öl pflanzlichen und/oder tierischen Ursprungs eine gemäß der Norm NF EN ISO 660 gemessene Säurezahl zwischen 60 und 250 mg KOH/g aufweist.

4. Stammlösung nach Anspruch 1, 2 oder 3, wobei das Öl pflanzlichen und/oder tierischen Ursprungs aus Tallöl- oder Rapsölfettsäuren allein oder im Gemisch ausgewählt ist.

5. Stammlösung nach einem der Ansprüche 1 bis 4, die 25 bis 45 Massen-% vernetzbares Copolymer aus aromatischem Monovinylkohlenwasserstoff und konjugiertem Dien mit einer mittels GPC-Chromatographie mit einem Polystyrol-Standard gemäß der Norm ASTM D3536 gemessenen mittleren Molekülmasse $M_w$ zwischen 50 000 und 500 000 Dalton, bezogen auf die Masse der Stammlösung, umfasst.

**6.** Stammlösung nach einem der Ansprüche 1 bis 5, wobei es sich bei dem vernetzbaren Copolymer aus aromatischem Monovinylkohlenwasserstoff und konjugiertem Dien mit einer mittels GPC-Chromatographie mit einem Polystyrol-Standard gemäß der Norm ASTM D3536 gemessenen mittleren Molekülmasse $M_w$ zwischen 50 000 und 500 000 Dalton um ein Copolymer aus Styrol und Butadien und einem Vernetzungsmittel handelt.

**7.** Stammlösung nach einem der Ansprüche 1 bis 5, wobei es sich bei dem vernetzbaren Copolymer aus aromatischem Monovinylkohlenwasserstoff und konjugiertem Dien mit einer mittels GPC-Chromatographie mit einem Polystyrol-Standard gemäß der Norm ASTM D3536 gemessenen mittleren Molekülmasse $M_w$ zwischen 50 000 und 500 000 Dalton um ein Copolymer aus Styrol und Butadien mit einem Gehalt an aus Butadien stammenden 1,2-Doppelbindungsmotiven zwischen 5 und 50 Massen-%, bezogen auf die Gesamtmasse der Butadienmotive, mit oder ohne Vernetzungsmittel handelt.

**8.** Verfahren zur Herstellung einer Stammlösung nach einem der Ansprüche 1 bis 7, wobei man mindestens ein saures Öl pflanzlichen und/oder tierischen Ursprungs, mindestens 20 Massen-% eines Polymers, bei dem es sich um ein vernetzbares Copolymer aus aromatischem Monovinylkohlenwasserstoff und konjugiertem Dien mit einer mittels GPC-Chromatographie mit einem Polystyrol-Standard gemäß der Norm ASTM D3536 gemessenen mittleren Molekülmasse $M_w$ zwischen 50 000 und 500 000 Dalton handelt, bezogen auf die Masse der Stammlösung, mit oder ohne mindestens ein Vernetzungsmittel bei zwischen 120°C und 220°C für einen Zeitraum von 1 Stunde bis 48 Stunden in Kontakt bringt.

**9.** Verwendung einer Stammlösung nach einem der Ansprüche 1 bis 7 zur Herstellung einer Bitumen/Polymer-Zusammensetzung.

**10.** Verfahren zur Herstellung einer Bitumen/PolymerZusammensetzung durch Verdünnen einer gemäß einem der Ansprüche 1 bis 7 erhaltenen Stammlösung in mindestens einem Bitumen bei zwischen 120°C und 220°C für einen Zeitraum von 10 Minuten bis 48 Stunden, wobei die Endkonzentration an Polymer in der Bitumen/PolymerZusammensetzung zwischen 0,5 und 15 Massen-%, bezogen auf die Masse der Bitumen/Polymer-Zusammensetzung, beträgt.

**11.** Verfahren zur Herstellung eines Asphalts durch Verdünnen einer gemäß einem der Ansprüche 1 bis 7 erhaltenen Stammlösung in mindestens einem Bitumen bei zwischen 120°C und 220°C für einen Zeitraum von 10 Minuten bis 48 Stunden, wobei die Endkonzentration an Polymer in der Bitumen/Polymer-Zusammensetzung zwischen 0,5 und 15 Massen-%, bezogen auf die Masse der Bitumen/Polymer-Zusammensetzung, beträgt, und anschließendes Mischen der Bitumen/PolymerZusammensetzung mit Granulaten bei zwischen 120°C und 220°C.

**Claims**

**1.** Mother solution devoid of oil of petroleum origin comprising at least one oil of vegetable and/or animal origin, from 20% to 50% by weight of a polymer which is a crosslinkable copolymer of monovinylaromatic hydrocarbon and of conjugated diene having an average molecular weight $M_w$, measured by GPC chromatography with a polystyrene standard according to Standard ASTM D3536, of between 50 000 and 500 000 daltons, with respect to the weight of the mother solution, with or without at least one crosslinking agent, the said oil of vegetable and/or animal origin being acidic, the acid number, measured according to Standard NF EN ISO 660, being between 50 and 300 mg KOH/g, and comprising at least 50% by weight of fatty acids in the free form, with respect to the weight of oil of vegetable and/or animal origin.

**2.** Mother solution according to Claim 1, in which the oil of vegetable and/or animal origin comprises at least 60% by weight of fatty acids in the free form, with respect to the weight of oil of vegetable and/or animal origin.

**3.** Mother solution according to Claim 1 or 2, in which the oil of vegetable and/or animal origin has an acid number, measured according to Standard NF EN ISO 660, of between 60 and 250 mg KOH/g.

**4.** Mother solution according to Claim 1, 2 or 3, in which the oil of vegetable and/or animal origin is chosen from fatty acids of tall oil or of rapeseed oil, taken alone or as a mixture.

**5.** Mother solution according to any one of Claims 1 to 4, comprising from 25% to 45% by weight of crosslinkable copolymer of monovinylaromatic hydrocarbon and of conjugated diene having an average molecular weight $M_w$,

measured by GPC chromatography with a polystyrene standard according to Standard ASTM D3536, of between 50 000 and 500 000 daltons, with respect to the weight of the mother solution.

6. Mother solution according to any one of Claims 1 to 5, in which the crosslinkable copolymer of monovinylaromatic hydrocarbon and of conjugated diene having an average molecular weight $M_w$, measured by GPC chromatography with a polystyrene standard according to Standard ASTM D3536, of between 50 000 and 500 000 daltons is a copolymer of styrene and of butadiene and a crosslinking agent.

7. Mother solution according to any one of Claims 1 to 5, in which the crosslinkable copolymer of monovinylaromatic hydrocarbon and of conjugated diene having an average molecular weight $M_w$, measured by GPC chromatography with a polystyrene standard according to Standard ASTM D3536, of between 50 000 and 500 000 daltons is a copolymer of styrene and of butadiene having a content of units having 1,2- double bonds resulting from butadiene of between 5% and 50% by weight, with respect to the total weight of the butadiene units, with or without crosslinking agent.

8. Process for the preparation of a mother solution according to any one of Claims 1 to 7, in which at least one acidic oil of vegetable and/or animal origin, at least 20% by weight of a polymer which is a crosslinkable copolymer of monovinylaromatic hydrocarbon and of conjugated diene having an average molecular weight $M_w$, measured by GPC chromatography with a polystyrene standard according to Standard ASTM D3536, of between 50 000 and 500 000 daltons, with respect to the weight of the mother solution, with or without at least one crosslinking agent, are brought into contact between 120°C and 220°C for a period of 1 hour to 48 hours.

9. Use of a mother solution according to any one of Claims 1 to 7 to prepare a bitumen/polymer composition.

10. Process for the preparation of a bitumen/polymer composition by diluting between 120°C and 220°C, for a period of 10 minutes to 48 hours, a mother solution obtained according to any one of Claims 1 to 7 in at least one bitumen, the final concentration of polymer in the bitumen/polymer composition being between 0.5% and 15% by weight, with respect to the weight of the bitumen/polymer composition.

11. Process for the preparation of a bituminous mix by diluting a mother solution obtained according to any one of Claims 1 to 7 in at least one bitumen, between 120°C and 220°C, for a period of 10 minutes to 48 hours, the final concentration of polymer in the bitumen/polymer composition being between 0.5% and 15% by weight, with respect to the weight of the bitumen/polymer composition, and then mixing the said bitumen/polymer composition with aggregates, between 120°C and 220°C.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0096638 A
- EP 0582703 A
- WO 2007068461 A
- WO 2008077888 A
- WO 0210285 A
- FR 2894588

**Littérature non-brevet citée dans la description**

- **P. AHMEDZADE et al.** *CONSTRUCTION AND BUILDING MATERIALS,* 2007, vol. 21, 626-633